# EUROPEAN PATENT SPECIFICATION

(11) **EP 4 368 882 B1**
(45) Date of publication and mention of the grant of the patent: **31.12.2025**
(21) Application number: 22205949.5
(22) Date of filing: 08.11.2022
(51) Int. Cl.: F21V 23/00, F21V 21/02, H02G 3/04, H02G 3/32

(54) **LUMINAIRE CARRIER SYSTEM**
LEUCHTENTRÄGERSYSTEM
SYSTÈME DE SUPPORT DE LUMINAIRE

(43) Date of publication of application: 15.05.2024
(73) Proprietor: Zumtobel Lighting GmbH, 6850 Dornbirn (AT)
(72) Inventor: SANDRI, Laura, 6850 Dornbirn (AT)
(74) Representative: Kiwit, Benedikt

(56) References cited:
- EP-A1- 3 067 617
- WO-A1-03/044919
- US-A1- 2017 122 509
- US-B1- 11 236 858

## Description

The present invention relates to a luminaire carrier system with a longitudinal carrier having a longitudinal cable channel for arranging cables therein, a luminaire having such a luminaire carrier system, and a cover element for partially covering an opening of such a longitudinal cable channel.

Luminaire carrier systems having a longitudinal carrier delimiting a longitudinal cable channel are known in the prior art. The carrier gives stability to the luminaire - usually due to its three-dimensional shape - and allows attachment of luminaire components, like light sources, optical elements, electrical and/or electronic components, and the like. The cable channel allows for storing cables used for operating the luminaire, e.g. for feeding the luminaire or its light sources with energy and/or data. For inserting the cables into the cable channel, the cable channel often comprises a (longitudinal) opening. To prevent the cables from falling out of the channel, it is known to attach cover elements to the carrier, e.g. by use of screws or other attachment means, to at least partially cover the opening. In case of a longitudinal carrier, a plurality of such cover elements can be provided along the extension direction of the luminaire.

WO 03/044919 A1 describes an installation device for cables to be laid along a wall comprising of cable holders and a cover for a sewerage system. The cover in this invention comprises a hinged clip that folds to an open position and attaches to at least partially cover a pair of channels that comprise the cable holders. US 11 236 858 B1 describes a mounting bracket for attachment to a strut channel. Said mounting bracket includes an attachment structure and at least one mounting structure. The attachment structure includes at least two clips facing in laterally opposite directions and sized to fit within an opening of a strut channel. The clips may be manipulated with applied force to move the bracket. When the mounting bracket is attached to the strut channel, at least one of the mounting structures is positioned at least partially within the strut channel interior. US 2017/0122509 A1 describes a light strip system comprising an elongated carrier formed by mounting rails and a lighting module arranged in a space created in the mounting rail element. To retain the lighting module in the rails, there exist contact regions on opposite lateral sides. EP 3 067 617 A1 describes a method for assembling a lamp, in which an elongated base body consisting of a U-shaped open profile is closed by at least one light cover with a plurality of LEDs and a cable harness, wherein cable harness is routed to supply electrical energy and connected to the LEDs.

It is also known that, for some purposes, additional external wiring is required; e.g. for feeding additional devices, like sensors being attached to the luminaire. To securely store this wiring, additional cable holders can be attached to the carrier, e.g. by use of screws or other attachment means. The wiring can then be guided through the cable holders to secure the wiring accordingly.

It is thus an object of the present invention to provide a luminaire carrier system and a luminaire provided therewith as well as a cover element for such a luminaire, which allow for an easy and secure storage of wiring or cables.

This object is achieved by the subject-matter as defined in the independent claims. The dependent claims study further the central idea of the present invention.

According to a first aspect of the present invention, a luminaire carrier system is provided. The luminaire carrier system comprises a carrier, which extends longitudinally along an extension direction, which thus generally forms the extension direction of the overall luminaire carrier system as well as preferably also of a luminaire provided therewith. The luminaire carrier system further comprises a cover element being attachable or attached to the carrier. The carrier delimits at least one cable channel extending longitudinally along the extension direction. The carrier comprises at least one opening extending longitudinally along the extension direction on one side (e.g. a rear side) of the carrier; preferably along the whole carrier. The cable channel is accessible via this opening for inserting cables. The carrier comprises a retaining channel extending longitudinally along the extension direction adjacent to the cable channel. The retaining channel is open towards the one side (e.g. the rear side of the carrier). The cover element comprises a coupling section and at least one cover section extending laterally away from the coupling section. The cover element can be inserted into the retaining channel with the coupling section at any position along the extension direction in an insertion direction, which is directed at the one side into the retaining channel (e.g. towards an inside or a front side of the carrier), and can thereby - i.e. by the tool-free insertion action itself - be secured in the retaining channel in such a way that the cover section of the so attached cover element at least partially or completely spans the opening at the one side radially to the extension direction, and thus partially covers the opening.

The described luminaire carrier system allows for an easy storage of cables in the longitudinal cable channel. Insertion of these cables is facilitated by providing a longitudinal opening. By providing the cover element, the cables received in the cable channel can be securely stored and retained inside the cable channel. As the cover element can be simply secured in the retaining channel automatically by inserting the same in the insertion direction into the retaining channel, assembly of the luminaire carrier system is facilitated, while the cables are and remain effectively stored. The mere - i.e. tool-free - insertion (action) of the cover element into the retaining channel allows for a simple assembly of the cover element. As the cover section is automatically positioned when the coupling section is secured, false assembly can be avoided and overall assembly be facilitated. The assembly as such is most simplified, as it only requires the insertion of the cover element by inserting the coupling section into the retaining channel, to automatically secure the cover element and at the same time correctly and accurately position the cover section (partially) across (i.e. in the radial direction with respect to the extension direction) the opening.

In a preferred embodiment, the cover element is configured such that - once being attached - it can also be easily detached from the carrier or its retaining channel with or without the use of a tool (preferably tool-free), to allow an easy replacement and/or displacement of the cover element. In other words, the cover element may be releasably attached. Alternatively, the cover element may also be permanently attached.

The cover element may comprise two cover sections extending on both sides of the coupling section, with respect to the extension direction, and transversely to the insertion direction away from each other and away from the coupling section in a wing-like manner. In other words, one of the cover sections extends to a right side and the other one extends to a left side of the coupling section. The cover element thus has a simple but effective layout. Due to the wing-like layout, the cover element may be inserted in either orientation thus always covering the cable channel irrespective of the mounting orientation. Also, in case only one cable channel is provided, the cover section not spanning the opening may be used to be supported on a surface of the carrier thus allowing for a firm positioning of the cover element and preferably also biasing the cover section spanning the opening towards the covering direction; i.e. onto the carrier.

The carrier may preferably delimit two cable channels extending longitudinally along the extension direction. The two cable channels are each accessible via one of the openings for inserting cables. Hence, it is possible to install the cables as desired or even group the cables in separate functional groups.

The cable channels and their openings may preferably be separated from one another by the retaining channel. Hence, it is possible to easily and effectively partially cover each of the openings, as desired, by simply attaching the cover element to the carrier with its coupling section be secured in the retaining channel.

In case of the cover element having the wing-like layout and the carrier delimiting the at least two cable channels, the cover element can preferably be inserted into the retaining channel with the coupling section at any position along the extension direction in the insertion direction, and can thereby be secured in the retaining channel in such a way that the cover sections of the so attached cover element each at least partially or completely span the opening at the one side radially to the extension direction, and thus partially cover one of the two openings. Hence, a compact, but effective and secure storage of cables can be easily obtained in different cable channels by use of the corresponding cover element allowing for a very easy assembly.

The retaining channel may have a U-shaped cross section as viewed in the extension direction. The retaining channel thus has a comparably simple layout and can thus be easily produced. Also, the U-shaped cross-sectional layout allows for a stable and secure attachment of the cover element.

The retaining channel can preferably be delimited on both sides, with respect to the extension direction, by a wall section, respectively. Hence, while having a simple layout, the retaining channel with its wall sections allows for solidly supporting the cover element.

At least one or each of the wall sections may comprise a structured or contoured retaining surface facing towards the retaining channel. By this retaining surface, a firm fit of the coupling section in the retaining channel can be obtained, so that the cover element can be effectively secured in the retaining channel. For instance, the retaining surface can be roughened, corrugated, serrated, or in any other way structured or contoured. According to an embodiment, the wall sections can be formed as a screw channel (i.e. M4 screw channel) with a corresponding screwing structure as the retaining surface.

The coupling section may preferably extend substantially in a plane, the plane being spanned by the extension direction and the insertion direction. Hence, the coupling section can be provided in a compact manner, while providing a spatial layout at least in the plane to provide an effective couple-ability and, if present, a comparably large retaining surface.

The coupling section may preferably comprise two coupling subsections, which are arranged on either side of the extension direction. By providing these subsections, the coupling section can be easily designed to fit best, i.e. effectively, in the retaining channel. Hence, the two opposing elements can allow for a secure and tight fitment inside the retaining channel.

The coupling subsections may preferably be connected at a distal end of the coupling section spaced from the cover section - or, if present, the cover sections - in the insertion direction. As being connected at the distal end, which is an end which is first introduced into the retaining channel, the coupling subsections can be flexibly connected and may act like a spring member (e.g. a V-spring) to allow for a firm fitment of the coupling section in the retaining channel.

The coupling section, at least in the non-attached or released state, preferably has a V-shaped cross section as viewed in the extension direction; i.e. considering its attached orientation. Preferably, the coupling subsections extend from the connected distal end to diverge in a V-shaped manner. Hence, the cover element can be easily inserted into the retaining channel - preferably with a tapered end of the V-shape - so that the diverging subsections can be brought into fit engagement in the retaining channel - e.g. against the wall sections - by the continued insertion action, thus allowing for a defined but secure firm fitment of the coupling section in the retaining channel. In case of the coupling subsections being connected in a V-shape manner, the coupling subsections can be flexed towards each other, preferably when being inserted in the insertion direction into the retaining channel, thus allowing for a tight fitment of the cover element due to the coupling section being clamped inside the retaining channel.

The coupling section - or, if present, the coupling subsections thereof - each have a structured or contoured coupling surface facing laterally outwards - i.e. preferably away from each other - with respect to the extension direction and the insertion direction. With this coupling surface, the cover element can be firmly secured inside the retaining channel for an effective attachment of the cover element.

The coupling surface(s) and the retaining surface(s) may preferably cooperate in the inserted state of the cover element so as to secure the cover element in the retaining channel. This allows for a highly effective and secure attachment of the cover element to the carrier.

The coupling section, for attaching the cover element, can preferably be secured in the retaining channel via form fit and/or frictional connection and/or material locking. Hence, the cover element can be secured in any desired way according to the given requirements and characteristics related to the application area.

The or each of the cover sections may preferably delimit a cable holder channel. Hence, the cover element can, at the same time, serve as a cable holder thus reducing the number of parts and size of the whole system if this function - i.e. additiona attachment of cables to increase overall functionality - is additionally required. Also, the cable holder - as being part of the cover element - can also be easily provided and securely attached to the carrier thus resulting in a highly efficient assembly.

The cable holder channel preferably is open on both sides in the extension direction (i.e. considering its attached orientation), which allows for an easy guidance of the wiring or cables to be held by the cover element particularly along the extension direction.

The cable holder channel may allow, for instance, the insertion of three cables with a respective 0.75mm² cross section or four cables with a respective 0.50mm² cross section, whereas the application is not limited thereto.

The or each of the cover sections may preferably comprise a channel cover section for at least partially or completely spanning the associated opening at the one side (e.g. a rear side of the carrier) radially to the extension direction, and thus partially covering the associated opening, when the cover element is attached. The or each of the cover sections may preferably also comprise a cable holder section on a side of the channel cover section facing opposite to the insertion direction (e.g. to a rear direction). The channel cover section and the cable holder section together delimit the cable holder channel. Hence, the cover element can be compactly provided, as the channel cover section functions as both, i.e. partially covering the opening and delimiting the cable holder channel. Also, with the cable holder section, a comparably simple layout of the cable holder channel can be provided, while allowing for a secure and effective support of corresponding cables.

The cable holder section may preferably be connected to the channel cover section at a distal end of the cover section or its cable holder section with respect to the coupling section. Moreover, the cable holder section is not connected to the channel cover section at a proximal end of the cover section or its cable holder section with respect to the coupling section. The cable holder section preferably is elastically or resiliently pivotable via its distal end relative to the channel cover section from a closed position to an open position such that the cable holder channel is selectively accessible for lateral insertion of cables on the side of the proximal end. Preferably, the cable holder section is biased towards the closed position. Hence, the cover element can have a simple layout while additionally providing the cable holder function. As the cable holder section is resiliently pivotable with respect to the channel cover section, the cable holder channel can be easily converted from a closed position into an open position for insertion of cables. Also, as this pivoting action is performed by elastically or resiliently deforming the cable holder section with respect to the channel cover section, the cable holder section is biased towards the closed position at least when being converted into the open position. Hence, any cables being inserted into the cable holder channel are securely received and supported therein.

The cable holder section and/or the channel cover section may preferably comprise an insertion contour (or insertion structure) in the region of the proximal end of the cover section or its cable holder section, which insertion contour is configured such that, when force is applied onto an insertion contour from the outside in a direction towards the cable holder channel, the cable holder section is pivoted elastically or resiliently into the open position. Hence, insertion of any cables into the cable holder channel is facilitated, which results in an easy assembly.

The insertion contour may preferably be further configured such that, when force is applied onto the insertion contour from inside the cable holder channel in a direction towards the outside, the cable holder section remains in its closed position. Hence, unintended loosening of cables off the cable holder channel can be effectively prevented.

The cable holder section may preferably comprise a handle portion via which a user can (elastically or resiliently) pivot the cable holder section to the open position for selective lateral access to the cable holder channel. Hence, access to the cable holder channel is facilitated for a user. The handle portion is preferably provided at the proximal end of the cable holder section, which increases a comfortable opening of the cable holder channel for a user.

The cover element may preferably have an L-shaped or a T-shaped cross section as viewed in the extension direction; i.e. considering its attached orientation. The L-shape can be obtained in case of the cover element having only one cover section extending laterally away from the coupling section. The T-shape can be obtained in case of the wing-like layout of the cover element having two cover sections extending on opposite sides away from each other. Hence, a simple but effective layout of the cover element can be provided. The cover element can thus be easily produced, while having a high and effective functionality.

The cover element is preferably made of or from plastic. The cover element can thus be easily produced, e.g. by injection moulding. Also, the characteristics of the cover element can be easily adjusted so that a high variability can be obtained. E.g., by using two-component injection moulding, the cover element can even be widely tailored according to the required needs.

The carrier is preferably made of or from metal, like aluminium, sheet metal, and the like.

The carrier preferably has a front side, e.g., for providing light sources, and a rear side facing away from the front side. Preferably, the one side is the rear side. Hence, the opening can be hidden on a rear side of the luminaire carrier system, while the corresponding cabling can be effectively stored, secured by the cover element, which in turn can be invisibly provided when viewing from the front side usually facing towards the space to be eliminated and potential users.

According to a second aspect, the present invention is directed to a luminaire comprising a luminaire carrier system according to the present invention. Moreover, the luminaire comprises a light source, which is attached to the carrier; preferably to the front side thereof. Also, the luminaire may comprise at least one or a plurality of cables for feeding the luminaire and preferably at least the light source. The cable(s) can be or is/are arranged in the at least one cable channel. The cover element is secured with the coupling section at any position along the extension direction in the retaining channel, so that at least one or each cover section of the so attached cover element at least partially or completely spans the or one of the openings at the one side radially to the extension direction, and thus partially covers the respective opening in order to prevent cable(s) from falling out when arranged in the corresponding cable channel.

Hence, the advantages described for the luminaire carrier system can thus be transferred to a corresponding luminaire comprising said luminaire carrier system.

According to a third aspect, a cover element as such for a luminaire and in particular for at least partially covering an opening of a cable channel can be provided . The cover element comprises a coupling section for insertion in an insertion direction into a retaining channel of a carrier which extends longitudinally along an extension direction and which retaining channel is open towards one side. The cover element further comprises two cover sections extending on both sides of the coupling section and transversely to the insertion direction away from each other and away from the coupling section in a wing-like manner. Each of the cover sections comprises a channel cover section for at least partially or completely spanning and thus partially covering a longitudinal opening of a longitudinal cable channel when the cover element is attached by its coupling section, and a cable holder section on a side of the channel cover section facing opposite to the insertion direction. The channel cover section and the cable holder section together delimit a cable holder channel being open on both sides orthogonal to the insertion direction and/or in the extension direction; i.e. considering the attached orientation of the cover element.

This cover element combines plural functionalities, like covering a cable channel and being a cable holder, in a structurally simple but functionally effective layout. Reference is also made to the advantages described for the respective features in connection with the luminaire carrier system herein above, which apply likewise for the cover element itself.

The coupling section may comprise two coupling subsections, which are arranged on either side of the extension direction, wherein the coupling subsections are connected at a distal end of the coupling section spaced from cover sections in the insertion direction. By providing these subsections, the coupling section can be easily designed to fit best, i.e. effectively, in a receiving section, namely the retaining channel of a carrier. Hence, the two opposing elements can allow for a secure and tight fitment. As being connected at the distal end, which is an end which is first introduced when attaching the cover element, the coupling subsections can be flexibly connected and may act like a spring member (e.g. a V-spring) to allow for a firm fitment of the coupling section.

The coupling section, at least in the non-attached or released state - preferably has a V-shaped cross section as viewed in the extension direction; i.e. considering the attached orientation of the cover element. Preferably, the coupling subsections extend from the connected distal end to diverge in a V-shaped manner. Hence, the cover element can be easily inserted into a receiving section, namely the retaining channel of a carrier, - preferably with a tapered end of the V-shape - so that the diverging subsections can be brought into fit engagement in the receiving section by the continued insertion action, thus allowing for a defined but secure firm fitment of the coupling section. In case of the coupling subsections being connected in a V-shape manner, the coupling subsections can be flexed towards each other, preferably when being inserted in the insertion direction, thus allowing for a tight fitment of the cover element due to the coupling section being clamped at the receiving section - namely inside the retaining channel.

The coupling section or, if present, the coupling subsections thereof each may preferably have a structured or contoured coupling surface facing laterally outwards - i.e. preferably away from each other - with respect to the extension direction and the insertion direction. With this coupling surface, the cover element can be firmly secured inside the receiving section - namely the retaining channel - for an effective attachment of the cover element.

The cable holder section may preferably be connected to the channel cover section at a distal end of the cover section or its cable holder section with respect to the coupling section, and is not connected to the channel cover section at a proximal end of the cover section or its cable holder section with respect to the coupling section. The cable holder section may preferably be elastically or resiliently pivotable via its distal end relative to the channel cover section from a closed position to an open position such that the cable holder channel is selectively accessible for lateral insertion of cables on the side of the proximal end. Preferably, the cable holder section is biased towards the closed position. Hence, the cover element can have a simple layout while additionally providing the cable holder function. As the cable holder section is resiliently pivotable with respect to the channel cover section, the cable holder channel can be easily converted from a closed position into an open position for insertion of cables. Also, as this pivoting action is performed by elastically or resiliently deforming the cable holder section with respect to the channel cover section, the cable holder section is biased towards the closed position at least when being converted into the open position. Hence, any cables being inserted into the cable holder channel are securely received and supported therein.

The cable holder section and/or the channel cover section may preferably comprise an insertion contour in the region of the proximal end, which is configured such that, when force is applied onto the insertion contour from the outside in the direction towards the cable holder channel, the cable holder section is pivoted elastically or resiliently into the open position. Hence, insertion of any cables into the cable holder channel is facilitated, which results in an overall easy assembly.

The insertion contour may preferably be further configured such that, when force is applied onto the insertion contour from inside the cable holder channel in a direction towards the outside, the cable holder section remains in its closed position. Hence, insertion of any cables into the cable holder channel is facilitated, which results in an overall easy assembly.

The cable holder section may preferably comprise a handle portion via which a user can (preferably elastically or resiliently) pivot the cable holder section to the open position for selectively lateral access to the cable holder channel. The handle portion is preferably provided at the proximal end of the cable holder section. Hence, access to the cable holder channel is facilitated for a user.

The cover element preferably has a T-shaped cross section as viewed in the extension direction; i.e. considering its attached orientation. Hence, a simple but effective layout of the cover element can be provided. The cover element can thus be easily produced, while having a high and effective functionality.

The cover element is preferably made of or from plastic; e.g. by way of injection moulding. The cover element can thus be easily produced. Also, the characteristics of the cover element can be easily adjusted so that a high variability can be obtained. E.g., by using two-component injection moulding, the cover element can even be widely tailored according to the required needs.

Further features and advantages of the present invention will be described with reference to the enclosed figures.
- Fig. 1: shows a front view of a cover element according to an embodiment of the present invention,
- Fig. 2: shows a top view of the cover element of Fig. 1 viewed in direction II,
- Fig. 3: shows a side view of the cover element of Fig. 1 viewed in direction III,
- Fig. 4: is a perspective top view of the cover element according to Fig. 1,
- Fig. 5: shows a sectional front view of a luminaire carrier system according to an embodiment of the present invention with the cover element according to Fig. 1,
- Fig. 6: shows the luminaire carrier system of Fig. 5 in a perspective top view,
- Fig. 7: shows a perspective partial view of a luminaire according to an embodiment of the present invention with a luminaire carrier system according to Fig. 5, and
- Fig. 8: shows a front view of the luminaire according to Fig. 7 with additional luminaire components.

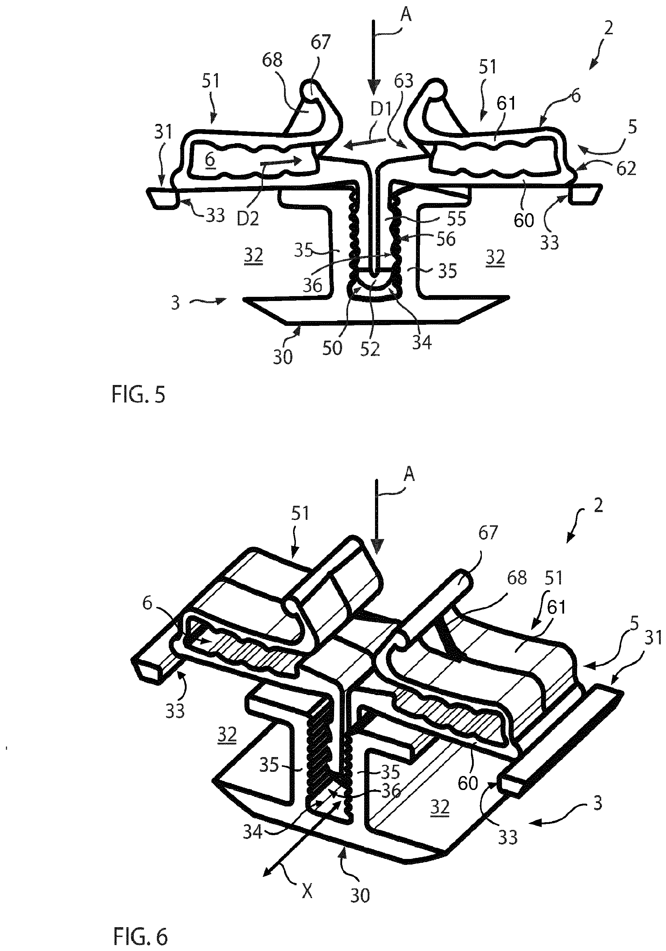

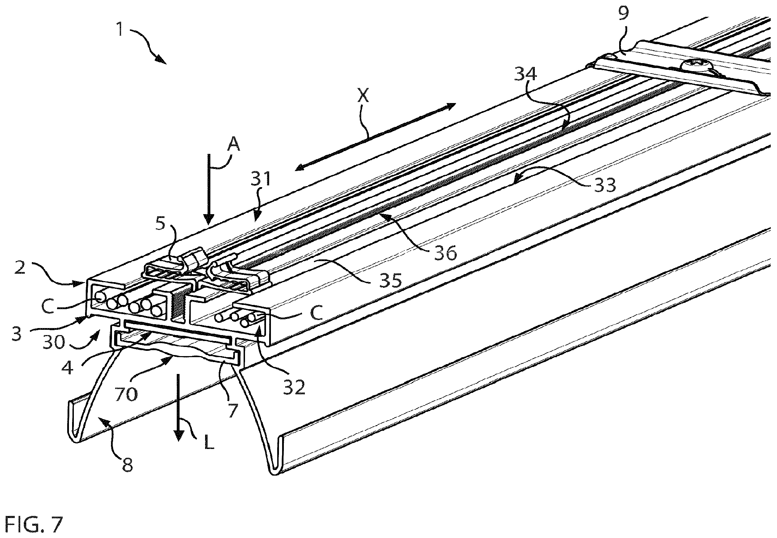

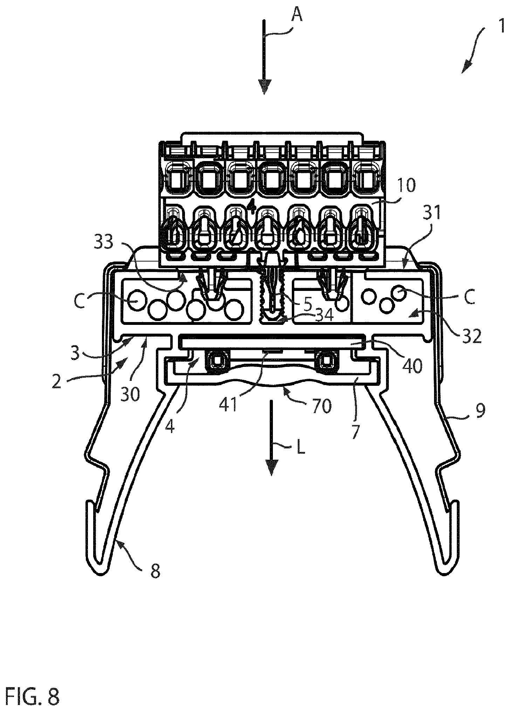

Figures 7 and 8 show a luminaire 1 according to an embodiment of the present invention at different assembly states. The luminaire 1 comprises a luminaire carrier system 2, which itself forms an independent part of the present invention and will be described in more detail in the following; also with reference to Figs. 5 and 6.

The luminaire carrier system 2 comprises a carrier 3, which extends longitudinally along an extension direction X. The carrier 3 may have a front side 30 for providing light sources 4 as exemplarily shown in Figs. 7 and 8. Also, the carrier 3 may have a rear side 31 here facing away from the front side 30.

The luminaire carrier system 2 further comprises a cover element 5 being attachable or - as shown in any of Figs. 5-8 - attached to the carrier 3. The cover element 5 itself also forms an independent part of the present invention, and is described in more detail in the context of the luminaire carrier system 2 and the luminaire 1 in the following.

The cover element 5 can be made of or from plastic or a plastic material. For instance, the cover element 5 can be made by injection moulding.

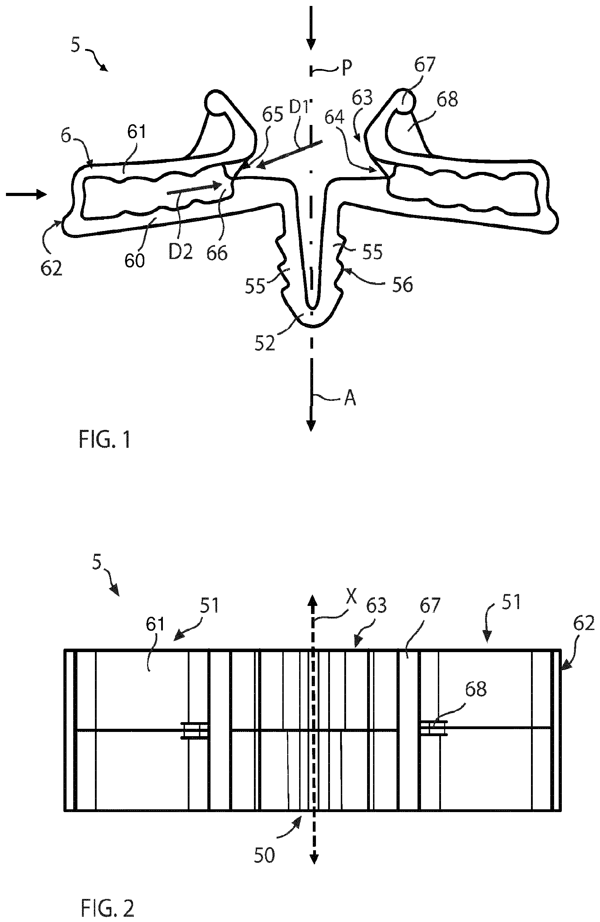

The cover element 5 can have an L-shaped cross section or - as particularly shown in Figs. 1 and 5 - a T-shaped cross section as viewed in the extension direction X.

The carrier 3 delimits at least one - and here two - cable channels 32, which extend longitudinally along the extension direction X, as exemplarily derivable from Figs. 6 and 7.

The carrier 3 comprises at least one - and here two - openings 33 extending longitudinally along the extension direction X on one side of the carrier 3. Here, the one side is the rear side 31. The respective cable channels 32 are accessible via the related opening 33 for inserting cables C, as exemplarily shown in Figs. 7 and 8.

The carrier 3 further comprises a retaining channel 34 extending longitudinally along the extension direction X adjacent to the cable channel 32 - and here adjacent to the two cable channels 32. The retaining channel 34 is open towards the one side; here the rear side 31. This is exemplarily shown in Figs. 5-8.

As can also be seen in Figs. 5-8, the retaining channel 34 preferably has a U-shaped cross section as viewed in the extension direction X.

As can be best seen in Fig. 5, the retaining channel 34 preferably is delimited on both sides, with respect to the extension direction X, by a wall section 35, respectively.

As can be best seen in Fig. 6, the at least one or - here - each of the wall sections 35 comprises a structured or contoured retaining surface 36 facing towards the retaining channel 34. Here, the retaining surface 36 is a serrated or corrugated inner surface delimiting the retaining channel 34 at the wall sections 35, while the present invention is not limited to this type of retaining surface 36.

The cover element 5 comprises a coupling section 50 and at least one - here two - cover sections 51 extending laterally away from the coupling section 50, as can be best seen in Figs. 1 and 5.

The cover element 5 can be inserted into the retaining channel 34 with the coupling section 50 at any position along the extension direction X in an insertion direction A, as exemplarily derivable from Figs. 5-8. The insertion direction A is directed at or from the one side - here at or from the rear side 31 - from outside into the retaining channel 34. By inserting the cover element 5 into the retaining channel 34 with the coupling section 50, the cover element 5 can thereby - i.e. by the insertion action itself - be secured in the retaining channel 34 in such a way that the cover section(s) 51 of the so attached cover element 5 at least partially or - as shown in Figs. 5-8 - completely span(s) the respective opening 33 at the one side - here the rear side 31 - radially to the extension direction X, and thus partially cover(s) the respective opening 33, as is well illustrated in the exemplary embodiments of Figs. 6 and 7.

As already noted, the cover element 5 may preferably comprise two cover sections 51 - as illustrated in the embodiment - which extend on both sides of the coupling section 50, with respect to the extension direction, and transversely to the insertion direction A away from each other and away from the coupling section 50 in a wing-like manner, as can be best seen in Figs. 1 and 5.

With reference to Figs. 5-8, the carrier 3 preferably delimits (at least) two cable channels 32, which extend, respectively, longitudinally along the extension direction X. The cable channels 32 are each accessible via one of the openings 33 for inserting cables C. The cable channels 32 and their openings 33 are preferably separated from one another by the retaining channel 34, as is best illustrated in Figs. 5 and 8. Reference is also made to Figs. 6 and 7.

In case of the cover element 5 comprising two cover sections 51 and the carrier 3 having the two cable channels 32 as described herein above, the cover element 5 can be inserted into the retaining channel 34 with the coupling section 50, at any position along the extension direction X, in the insertion direction A, and can thereby be secured in the retaining channel 34 in such a way that the cover sections 51 of the so attached cover element 5 each at least partially or - here - completely span the opening 33 at the one side - here the rear side 31 - radially to the extension direction X, and thus partially cover one of the two openings 33, as is exemplarily illustrated in Figs. 5-7.

The coupling section 50 preferably extends substantially in a plane P being spanned by the extension direction X and the insertion direction A as exemplarily shown in Figs. 1 and 5.

The coupling section 50 preferably comprises two coupling subsections 55, which are arranged on either side of the extension direction, as can be best seen in Figs. 1, 4 and 5. The coupling subsections 55 are preferably connected at a distal end 52 of the coupling section 50 spaced from the cover section 51 - or, as in the shown embodiment, the cover sections 51 - in the insertion direction A.

The coupling section 50 - at least in the non-inserted and thus relaxed state - preferably has a V-shaped cross section as viewed in the extension direction X.

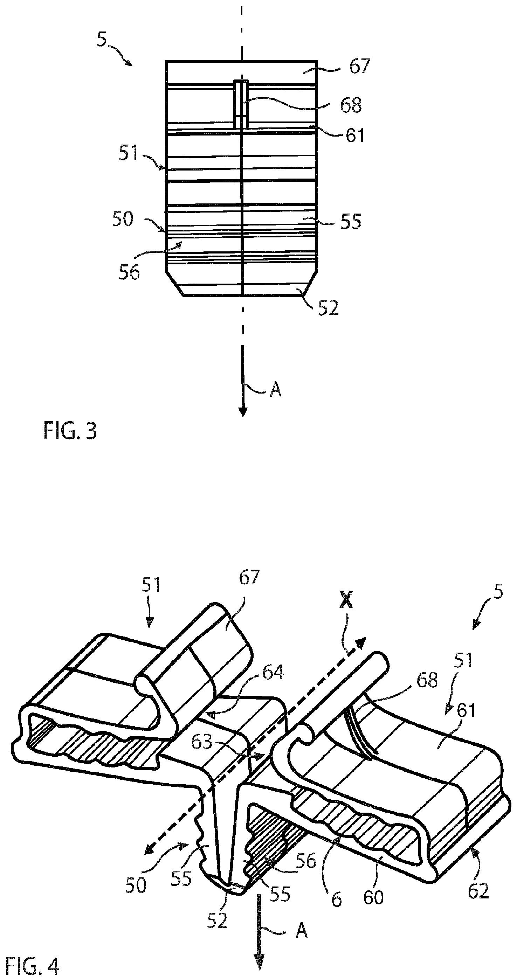

The coupling section 50 - or, if present, the coupling subsections 55 thereof - each may preferably have a structured or contoured coupling surface 56 facing laterally outwards with respect to the extension direction X and the insertion direction A, as exemplarily illustrated in Figs. 1 and 4.

The coupling surface(s) 56 and the retaining surface(s) 36 preferably cooperate in the inserted state of the cover element 5 so as to secure the cover element 5 in the retaining channel 34, as exemplarily illustrated in Figs. 5-8.

The coupling section 50, for attaching the cover element 5, can be secured in the retaining channel 34 via form fit and/or frictional connection and/or material locking. In the shown embodiment, the coupling section 50 is secured in the retaining channel 34 via form fit (due to the cooperation of the coupling surfaces 56 and the retaining surfaces 36) as well as frictional connection (due to the press fit of the collapsed V-shaped coupling section 50). Alternatively or additionally, also material locking can be obtained; e.g. by adhesion/gluing. In any case, a simple and tool-free assembly of the cover element 5 is desired.

The or each of the cover sections 51 preferably delimits a cable holder channel 6, as can be best seen in Figs. 1 and 4-7. The cable holder channel 6 is preferably open on both sides in/of the extension direction X.

The or each of the cover sections 51 preferably comprises a channel cover section 60 for at least partially or completely spanning the associated longitudinal opening 33 at the one side - here the rear side 31 - radially to the extension direction X, and thus partially covering the associated opening 33, when the cover element 5 is attached through its coupling section 50 to the carrier 3.

The or each of the cover sections 51 preferably further comprises a cable holder section 61 on a side of the channel cover section 60 facing opposite to the insertion direction A; here towards the rear of the carrier 3.

The channel cover section 60 and the cable holder section 61 together delimit the cable holder channel 6 of the respective cover section 51, as can be best seen in Figs. 1 and 4-7.

The cable holder section 61 is preferably connected to the channel cover section 60 at a distal end 62 of the cover section 51 or its cable holder section 61 with respect to the coupling section 50. Moreover, the cable holder section 61 is not connected to the channel cover section 60 at a proximal end 63 of the cover section 51 or its cable holder section 61 with respect to the coupling section 50. The cable holder section 61 is preferably elastically or resiliently pivotable via its distal end 62 relative to the channel cover section 60 from a closed position (as shown in Figs. 1-7) to an open position (not shown) such that the cable holder channel 6 - in the open position - is selectively accessible for lateral insertion of cables C on the side of the proximal end 63.

The cable holder section 61 and/or the channel cover section 60 preferably comprise(s) an insertion contour 64 in the region of the proximal end 63, which insertion contour 64 is configured such that, when force is applied onto the insertion contour 64 from the outside in a direction D1 towards the cable holder channel 6, the cable holder section 61 is pivoted (preferably elastically or resiliently) into the open position. Therefore, as exemplarily shown in the embodiment and best illustrated in Figs. 1 and 5, the insertion contour 64 may be shaped from the outside towards the cable holder channel 6 as a lead-in chamfer 65, as best illustrated in Figs. 1 and 5.

The insertion contour 64 may preferably be further configured such that, when force is applied onto the insertion contour 64 from inside the cable holder channel 6 in a direction D2 towards the outside, the cable holder section 61 remains in its closed position. Therefore, the insertion contour 64 may be shaped at its side facing towards the cable holder channel 6 by a blocking contour 66, as best illustrated in Figs. 1 and 5.

As can be best seen in Figs. 1-7, the cable holder section 61 preferably comprises a handle portion 67 via which a user can (preferably elastically or resiliently) pivot the cable holder section 61 to the open position for selective lateral access to the cable holder channel 6. In the preferred illustrated embodiment, the handle portion 67 is preferably positioned at the proximal end of the cable holder section 61.

As can also be seen in Figs. 1-6, the cable holder section 61 comprises a reinforcement rib 68, which here connects the handle portion 67 and the cable holder section 61. This allows for an overall stiffer layout of the cable holder section 61. Hence, the handle portion 67 can be operated more accurately. Also, the cable holder section 61 can be more effectively retained in the closed position during operation of a luminaire 1 being equipped with the cover element 5.

In Figs. 7 and 8, an embodiment of the luminaire 1 according to the present invention is shown. As mentioned, the luminaire 1 comprises the luminaire carrier system 2 according to the present invention and as exemplarily described herein above.

Moreover, the luminaire 1 further comprises a light source 4, which is here attached to the carrier 3 on its front side 30. In the shown embodiment, the light source 4 preferably is an LED (light-emitting diode) light source comprising a PCB (printed circuit board) 40 being equipped with at least one or a plurality of LED-chips 41.

Downstream the light-emitting direction L, an optional optical element 7 can be provided. Here, the optical element 7 comprises a lens section 70, e.g. for controlling the light-emitting direction. The optical element 7 can also be attached to the carrier 3; here at a front side 30 thereof. The luminaire 1 may further comprise additional elements for controlling the light direction, like a reflector 8. The luminaire 1 may further comprise attachment elements 9, here exemplarily shown in the form of a support clamp, for attaching the luminaire 1 or for attaching components (like a housing or cover or any other components) to the luminaire 1. The luminaire 1 may further comprise electrical and/or electronic components, like an LED-driver or electrical terminals 10, as exemplarily shown in Fig. 8.

With reference to Figs. 7 and 8, the luminaire 1 may further comprise at least one or a plurality of cables C for operating or feeding the luminaire 1 or at least the light source 4. These cables C can be arranged in the at least one - here two - cable channels 32.

The cover element 5 is here secured with the coupling section 50 at any desired position along the extension direction X in the retaining channel 34, so that at least one or each cover section 51 of the so attached cover element 5 at least partially or - as shown - completely spans the or one of the openings 33 at the one side - here the rear side 31 - radially to the extension direction X, and thus partially covers the respective opening 33 in order to prevent the cables C from falling out when arranged in the corresponding cable channels 32.

As not illustrated, additional cables or wiring can be provided at the rear side 31 of the carrier 3, e.g. for feeding/operating additional electrical or electronic components, like sensors. These additional cables or wiring can be guided through the cable holder channel 6 of the cover elements 5, and thus carried by this or these cover elements 5.

The luminaire carrier system 2 can comprise a plurality of the cover elements 5, which are preferably distributed along the carrier 3 in the extension direction X at desired positions. For instance, the cover elements 5 can be evenly distributed in defined distances along the extension direction X.

The present invention is not limited by the embodiments described herein above as long as being covered by the append claims.

## Claims

1. Luminaire carrier system (2), comprising
a carrier (3) which extends longitudinally along an extension direction (X), and
a cover element (5) being attachable to the carrier (3),
wherein the carrier (3) delimits at least one cable channel (32) extending longitudinally along the extension direction (X),
wherein the carrier (3) comprises at least one opening (33) extending longitudinally along the extension direction (X) on one side of the carrier (3), and via which the cable channel (32) is accessible for inserting cables (C),
wherein the carrier (3) comprises a retaining channel (34) extending longitudinally along the extension direction (X) adjacent to the cable channel (32), and which is open towards the one side,
wherein the cover element (5) comprises a coupling section (50) and at least one cover section (51) extending laterally away from the coupling section (50),
wherein the cover element (5) can be inserted into the retaining channel (34) with the coupling section (50) at any position along the extension direction (X) in an insertion direction (A), which is directed at the one side into the retaining channel (34), and can thereby be secured in the retaining channel (34) in such a way that the cover section (51) of the so attached cover element (5) at least partially or completely spans the opening (33) at the one side radially to the extension direction (X), and thus partially covers the opening (33).

2. The luminaire carrier system (2) according to claim 1, wherein the cover element (5) comprises two cover sections (51) extending on both sides of the coupling section (50), with respect to the extension direction (X), and transversely to the insertion direction (A) away from each other and away from the coupling section (50) in a wing-like manner, and/or
wherein the carrier (3) delimits two cable channels (32) extending longitudinally along the extension direction (X), which are each accessible via one of the openings (33) for inserting cables (C), wherein the cable channels (32) and their openings (33) are preferably separated from one another by the retaining channel (34),
wherein preferably, in case the cover element (5) comprises the two cover sections (51) and the carrier (3) delimits the two cable channels (32), the cover element (5) can be inserted into the retaining channel (34) with the coupling section (50) at any position along the extension direction (X) in the insertion direction (A), and can thereby be secured in the retaining channel (34) in such a way that the cover sections (51) of the so attached cover element (5) each at least partially or completely span the opening (33) at the one side radially to the extension direction (X), and thus partially cover one of the two openings (33).

3. The luminaire carrier system (2) according to any one of the preceding claims,
wherein the retaining channel (34) has a U-shaped cross-section as viewed in the extension direction (X), and/or
wherein the retaining channel (34) is delimited on both sides, with respect to the extension direction (X), by a wall section (35), respectively, wherein preferably at least one or each of the wall sections (35) comprises a structured or contoured retaining surface (36) facing towards the retaining channel (34).

4. The luminaire carrier system (2) according to any one of the preceding claims,
wherein the coupling section (50) comprises two coupling subsections (55), which are arranged on either side of the extension direction (X),
wherein preferably the coupling subsections (55) are connected at a distal end (52) of the coupling section (50) spaced from the cover section (51) or, if present, the cover sections (51) in the insertion direction (A), and/or
wherein the coupling section (50), at least in the non-attached state, has a V-shaped cross-section as viewed in the extension direction (X).

5. The luminaire carrier system (2) according to any one of the preceding claims,
wherein the coupling section (50) or, if present, the coupling subsections (55) thereof each have a structured or contoured coupling surface (56) facing laterally outwards with respect to the extension direction (X) and the insertion direction (A),
wherein preferably, if present, the retaining surface(s) (36) and the coupling surface(s) (56) cooperate in the inserted state of the cover element (5) so as to secure the cover element (5) in the retaining channel (34).

6. The luminaire carrier system (2) according to any one of the preceding claims,
wherein the coupling section (50), for attaching the cover element (5), can be secured in the retaining channel (34) via form fit and/or frictional connection and/or material locking.

7. The luminaire carrier system (2) according to any one of the preceding claims,
wherein the or each of the cover sections (51) delimits a cable holder channel (6), which is preferably open on both sides in the extension direction (X).

8. The luminaire carrier system (2) according to claim 7, wherein the or each of the cover sections (51) comprises
• a channel cover section (60) for at least partially or completely spanning the associated opening (33) at the one side radially to the extension direction (X), and thus partially covering the associated opening (33), when the cover element (5) is attached, and
• a cable holder section (61) on a side of the channel cover section (60) facing opposite to the insertion direction (A),
which together delimit the cable holder channel (6).

9. The luminaire carrier system (2) according to claim 8, wherein the cable holder section (61) is connected to the channel cover section (60) at a distal end (62) of the cover section (51) or its cable holder section (61) with respect to the coupling section (50), and is not connected to the channel cover section (60) at a proximal end (63) of the cover section (51) or its cable holder section (61) with respect to the coupling section (50), wherein the cable holder section (61) being elastically pivotable via its distal end (62) relative to the channel cover section (60) from a closed position to an open position such that the cable holder channel (6) is selectively accessible for lateral insertion of cables (C) on the side of the proximal end (63).

10. The luminaire carrier system (2) according to claim 9, wherein the cable holder section (61) and/or the channel cover section (60) comprise(s) an insertion contour (64) in the region of the proximal end (63), which is configured such that, when force is applied onto the insertion contour (64) from the outside in a direction (D1) towards the cable holder channel (6), the cable holder section (61) is pivoted into the open position,
wherein preferably the insertion contour (64) is further configured such that, when force is applied onto the insertion contour (64) from inside the cable holder channel (6) in a direction (D2) towards the outside, the cable holder section (61) remains in its closed position.

11. The luminaire carrier system (2) according to claim 9 or 10, wherein the cable holder section (61) comprises, preferably at its proximal end (63), a handle portion (67) via which a user can pivot the cable holder section (61) to the open position for selective lateral access to the cable holder channel (6).

12. The luminaire carrier system (2) according to any one of the preceding claims,
wherein the cover element (5) has an L-shaped or a T-shaped cross-section as viewed in the extension direction (X), and/or
wherein the cover element (5) is made of or from plastic.

13. The luminaire carrier system (2) according to any one of the preceding claims,
wherein the carrier (3) has a front side (30) for providing light sources (4) and a rear side (31) facing away from the front side (30),
wherein preferably the one side is the rear side (31).

14. Luminaire (1), comprising:
a luminaire carrier system (2) according to any one of the preceding claims,
a light source (4) which is attached to the carrier (3), and
optionally at least one or a plurality of cables (C) for feeding the light source (4), which is/are arranged in the at least one cable channel (32),
wherein the cover element (5) is secured with the coupling section (50) at any position along the extension direction (X) in the retaining channel (34), so that at least one or each cover section (51) of the so attached cover element (5) at least partially or completely spans the or one of the opening(s) (33) at the one side radially to the extension direction (X), and thus partially covers the respective opening (33) in order to prevent the cable(s) (C) from falling out when being arranged in the corresponding cable channel (32).

## Patentansprüche

1. Leuchtenträgersystem (2), umfassend
einen Träger (3), der sich längs entlang einer Erstreckungsrichtung (X) erstreckt, und
ein Abdeckelement (5), das an dem Träger (3) befestigbar ist,
wobei der Träger (3) mindestens einen Kabelkanal (32) begrenzt, der sich längs entlang der Erstreckungsrichtung (X) erstreckt,
wobei der Träger (3) mindestens eine Öffnung (33) umfasst, die sich längs entlang der Erstreckungsrichtung (X) auf einer Seite des Trägers (3) erstreckt und über die der Kabelkanal (32) zum Einführen von Kabeln (C) zugänglich ist,
wobei der Träger (3) einen sich längs entlang der Erstreckungsrichtung (X) erstreckenden Haltekanal (34) angrenzend an den Kabelkanal (32) umfasst, der zu der einen Seite hin offen ist,
wobei das Abdeckelement (5) einen Kopplungsabschnitt (50) und mindestens einen sich seitlich vom Kopplungsabschnitt (50) weg erstreckenden Abdeckabschnitt (51) umfasst,
wobei das Abdeckelement (5) mit dem Kopplungsabschnitt (50) an einer beliebigen Position entlang der Erstreckungsrichtung (X) in einer Einführrichtung (A), die an der einen Seite in den Haltekanal (34) hinein gerichtet ist, in den Haltekanal (34) eingeführt werden kann und dabei derart in dem Haltekanal (34) fixiert werden kann, dass der Abdeckabschnitt (51) des so befestigten Abdeckelements (5) die Öffnung (33) an der einen Seite radial zu der Erstreckungsrichtung (X) mindestens teilweise oder vollständig überspannt und somit die Öffnung (33) teilweise abdeckt.

2. Leuchtenträgersystem (2) nach Anspruch 1, wobei das Abdeckelement (5) zwei Abdeckabschnitte (51) umfasst, die sich auf beiden Seiten des Kopplungsabschnitts (50) in Bezug auf die Erstreckungsrichtung (X) und quer zu der Einführrichtung (A) flügelartig voneinander und von dem Kopplungsabschnitt (50) weg erstrecken, und/oder
wobei der Träger (3) zwei sich längs entlang der Erstreckungsrichtung (X) erstreckende Kabelkanäle (32) begrenzt, die jeweils über eine der Öffnungen (33) zum Einführen von Kabeln (C) zugänglich sind, wobei die Kabelkanäle (32) und ihre Öffnungen (33) vorzugsweise durch den Haltekanal (34) voneinander getrennt sind,
wobei vorzugsweise für den Fall, dass das Abdeckelement (5) die zwei Abdeckabschnitte (51) umfasst und der Träger (3) die zwei Kabelkanäle (32) begrenzt, das Abdeckelement (5) mit dem Kopplungsabschnitt (50) an einer beliebigen Position entlang der Erstreckungsrichtung (X) in der Einführrichtung (A) in den Haltekanal (34) eingeführt werden kann und dabei derart in dem Haltekanal (34) fixiert werden kann, dass die Abdeckabschnitte (51) des so befestigten Abdeckelements (5) jeweils die Öffnung (33) auf der einen Seite radial zu der Erstreckungsrichtung (X) mindestens teilweise oder vollständig überspannen und somit eine der zwei Öffnungen (33) teilweise abdecken.

3. Leuchtenträgersystem (2) nach einem der vorstehenden Ansprüche, wobei der Haltekanal (34) in der Erstreckungsrichtung (X) gesehen einen U-förmigen Querschnitt aufweist, und/oder
wobei der Haltekanal (34) in Bezug auf die Erstreckungsrichtung (X) auf beiden Seiten durch jeweils einen Wandabschnitt (35) begrenzt ist, wobei vorzugsweise mindestens einer oder jeder der Wandabschnitte (35) eine dem Haltekanal (34) zugewandte strukturierte oder konturierte Haltefläche (36) umfasst.

4. Leuchtenträgersystem (2) nach einem der vorstehenden Ansprüche, wobei der Kopplungsabschnitt (50) zwei Kopplungsunterabschnitte (55) umfasst, die auf beiden Seiten der Erstreckungsrichtung (X) angeordnet sind,
wobei vorzugsweise die Kopplungsunterabschnitte (55) an einem distalen Ende (52) des Kopplungsabschnitts (50) verbunden sind, das in der Einführrichtung (A) von dem Abdeckabschnitt (51) oder, falls vorhanden, den Abdeckabschnitten (51) beabstandet ist, und/oder
wobei der Kopplungsabschnitt (50) mindestens in dem nicht befestigten Zustand einen in der Erstreckungsrichtung (X) gesehen V-förmigen Querschnitt aufweist.

5. Leuchtenträgersystem (2) nach einem der vorstehenden Ansprüche, wobei der Kopplungsabschnitt (50) oder, falls vorhanden, die Kopplungsunterabschnitte (55) davon jeweils eine in Bezug auf die Erstreckungsrichtung (X) und die Einführrichtung (A) seitlich nach außen gewandte strukturierte oder konturierte Kopplungsfläche (56) aufweisen,
wobei vorzugsweise, falls vorhanden, die Haltefläche(n) (36) und die Kopplungsfläche(n) (56) in dem eingeführten Zustand des Abdeckelements (5) zusammenwirken, um das Abdeckelement (5) in dem Haltekanal (34) zu fixieren.

6. Leuchtenträgersystem (2) nach einem der vorstehenden Ansprüche, wobei der Kopplungsabschnitt (50) zum Befestigen des Abdeckelements (5) form- und/oder kraft- und/oder stoffschlüssig in dem Haltekanal (34) fixiert werden kann.

7. Leuchtenträgersystem (2) nach einem der vorstehenden Ansprüche, wobei der oder jeder der Abdeckabschnitte (51) einen Kabelhalterkanal (6) begrenzt, der in der Erstreckungsrichtung (X) vorzugsweise auf beiden Seiten offen ist.

8. Leuchtenträgersystem (2) nach Anspruch 7, wobei der oder jeder der Abdeckabschnitte (51) umfasst
• einen Kanalabdeckabschnitt (60) zum mindestens teilweisen oder vollständigen überspannen der zugehörigen Öffnung (33) auf der einen Seite radial zu der Erstreckungsrichtung (X) und somit zum teilweisen Abdecken der zugehörigem Öffnung (33), wenn das Abdeckelement (5) befestigt ist, und
• einen Kabelhalterabschnitt (61) auf einer der Einführrichtung (A) entgegengesetzt zugewandten Seite des Kanalabdeckabschnitts (60),
die gemeinsam den Kabelhalterkanal (6) begrenzen.

9. Leuchtenträgersystem (2) nach Anspruch 8, wobei der Kabelhalterabschnitt (61) an einem distalen Ende (62) des Abdeckabschnitts (51) oder dessen Kabelhalterabschnitts (61) in Bezug auf den Kopplungsabschnitt (50) mit dem Kanalabdeckabschnitt (60) verbunden ist und an einem proximalen Ende (63) des Abdeckabschnitts (51) oder dessen Kabelhalterabschnitts (61) in Bezug auf den Kopplungsabschnitt (50) nicht mit dem Kanalabdeckabschnitt (60) verbunden ist, wobei der Kabelhalterabschnitt (61) über sein distales Ende (62) relativ zu dem Kanalabdeckabschnitt (60) elastisch von einer geschlossenen Position in eine geöffnete Position schwenkbar ist, derart, dass der Kabelhalterkanal (6) selektiv für seitliche Einführung von Kabeln (C) auf der Seite des proximalen Endes (63) zugänglich ist.

10. Leuchtenträgersystem (2) nach Anspruch 9, wobei der Kabelhalterabschnitt (61) und/oder der Kanalabdeckabschnitt (60) in dem Bereich des proximalen Endes (63) eine Einführkontur (64) umfasst/umfassen, die derart konfiguriert ist, dass, wenn Kraft auf die Einführkontur (64) von außen in eine Richtung (D1) zu dem Kabelhalterkanal (6) einwirkt, der Kabelhalterabschnitt (61) in die geöffnete Position geschwenkt wird,
wobei vorzugsweise die Einführkontur (64) ferner derart konfiguriert ist, dass, wenn Kraft auf die Einführkontur (64) von innen des Kabelhalterkanals (6) in eine Richtung (D2) nach außen einwirkt, der Kabelhalterabschnitt (61) in seiner geschlossenen Position bleibt.

11. Leuchtenträgersystem (2) nach Anspruch 9 oder 10, wobei der Kabelhalterabschnitt (61), vorzugsweise an seinem proximalen Ende (63), einen Griffteil (67) umfasst, über den ein Benutzer den Kabelhalterabschnitt (61) in die geöffnete Position für selektiv seitlichen Zugang zu dem Kabelhalterkanal (6) schwenken kann.

12. Leuchtenträgersystem (2) nach einem der vorstehenden Ansprüche, wobei das Abdeckelement (5) in der Erstreckungsrichtung (X) gesehen einen L-förmigen oder einen T-förmigen Querschnitt aufweist, und/oder wobei das Abdeckelement (5) aus Kunststoff gebildet ist oder besteht.

13. Leuchtenträgersystem (2) nach einem der vorstehenden Ansprüche, wobei der Träger (3) eine Vorderseite (30) zum Bereitstellen von Lichtquellen (4) und eine von der Vorderseite (30) abgewandte Rückseite (31) aufweist,
wobei vorzugsweise die eine Seite die Rückseite (31) ist.

14. Leuchte (1), umfassend:
ein Leuchtenträgersystem (2) nach einem der vorstehenden Ansprüche,
eine Lichtquelle (4), die an dem Träger (3) befestigt ist, und
optional mindestens ein oder eine Vielzahl von Kabeln (C) zum Versorgen der Lichtquelle (4), das/die in dem mindestens einen Kabelkanal (32) angeordnet ist/sind,
wobei das Abdeckelement (5) mit dem Kopplungsabschnitt (50) an einer beliebigen Position entlang der Erstreckungsrichtung (X) in dem Haltekanal (34) fixiert ist, sodass mindestens ein oder jeder Abdeckabschnitt (51) des so befestigten Abdeckelements (5) die oder eine der Öffnung(en) (33) auf der einen Seite radial zu der Erstreckungsrichtung (X) mindestens teilweise oder vollständig überspannt und somit die jeweilige Öffnung (33) teilweise abdeckt, um ein Herausfallen des/der Kabel(s) (C) zu verhindern, wenn sie in dem entsprechenden Kabelkanal (32) angeordnet werden.

## Revendications

1. Système de support de luminaire (2), comprenant :
un support (3) qui s'étend longitudinalement le long d'une direction d'extension (X), et
un élément de couverture (5) pouvant être fixé au support (3),
dans lequel le support (3) délimite au moins un canal de câble (32) s'étendant longitudinalement le long de la direction d'extension (X),
dans lequel le support (3) comprend au moins une ouverture (33) s'étendant longitudinalement le long de la direction d'extension (X) sur un côté du support (3), et par laquelle le canal de câble (32) est accessible pour l'insertion de câbles (C),
dans lequel le support (3) comprend un canal de retenue (34) s'étendant longitudinalement le long de la direction d'extension (X) adjacente au canal de câble (32), et qui est ouvert d'un côté,
dans lequel l'élément de couverture (5) comprend une section de couplage (50) et au moins une section de couverture (51) s'étendant latéralement en s'éloignant de la section de couplage (50),
dans lequel l'élément de couverture (5) peut être inséré dans le canal de retenue (34) avec la section de couplage (50) à n'importe quelle position le long de la direction d'extension (X) dans une direction d'insertion (A), qui est dirigée d'un côté dans le canal de retenue (34), et peut ainsi être fixé dans le canal de retenue (34) de telle sorte que la section de couverture (51) de l'élément de couverture (5) ainsi fixé couvre au moins partiellement ou complètement l'ouverture (33) d'un côté radialement à la direction d'extension (X), et couvre ainsi partiellement l'ouverture (33).

2. Système de support de luminaire (2) selon la revendication 1, dans lequel l'élément de couverture (5) comprend deux sections de couverture (51) s'étendant des deux côtés de la section de couplage (50), par rapport à la direction d'extension (X), et transversalement à la direction d'insertion (A) en s'éloignant l'une de l'autre et en s'éloignant de la section de couplage (50) comme une aile, et/ou
dans lequel le support (3) délimite deux canaux de câbles (32) s'étendant longitudinalement le long de la direction d'extension (X), qui sont chacun accessibles par l'une des ouvertures (33) pour l'insertion de câbles (C), dans lequel les canaux de câbles (32) et leurs ouvertures (33) sont de préférence séparés l'un de l'autre par le canal de retenue (34),
dans lequel, de préférence, dans le cas où l'élément de couverture (5) comprend les deux sections de couverture (51) et le support (3) délimite les deux canaux de câbles (32), l'élément de couverture (5) peut être inséré dans le canal de retenue (34) avec la section de couplage (50) à n'importe quelle position le long de la direction d'extension (X) dans la direction d'insertion (A), et peut ainsi être fixé dans le canal de retenue (34) de telle sorte que les sections de couverture (51) de l'élément de couverture (5) ainsi fixé couvrent chacune au moins partiellement ou complètement l'ouverture (33) d'un côté radialement à la direction d'extension (X), et couvrent ainsi partiellement l'une des deux ouvertures (33).

3. Système de support de luminaire (2) selon l'une quelconque des revendications précédentes, dans lequel le canal de retenue (34) présente une section transversale en forme de U dans la direction d'extension (X), et/ou
dans lequel le canal de retenue (34) est délimité des deux côtés, par rapport à la direction d'extension (X), par une section de paroi (35), respectivement, dans lequel, de préférence, au moins une ou chacune des sections de paroi (35) comprend une surface de retenue structurée ou profilée (36) orientée vers le canal de retenue (34).

4. Système de support de luminaire (2) selon l'une quelconque des revendications précédentes, dans lequel la section de couplage (50) comprend deux sous-sections de couplage (55), qui sont disposées de part et d'autre de la direction d'extension (X),
dans lequel, de préférence, les sous-sections de couplage (55) sont reliées au niveau d'une extrémité distale (52) de la section de couplage (50), à l'écart de la section de couverture (51) ou, le cas échéant, des sections de couverture (51) dans la direction d'insertion (A), et/ou
dans lequel la section de couplage (50), au moins à l'état non fixé, présente une section transversale en forme de V, vue dans la direction d'extension (X).

5. Système de support de luminaire (2) selon l'une quelconque des revendications précédentes, dans lequel la section de couplage (50) ou, le cas échéant, les sous-sections de couplage (55) de celle-ci présentent chacune une surface de couplage structurée ou profilée (56) orientée latéralement vers l'extérieur par rapport à la direction d'extension (X) et à la direction d'insertion (A),
dans lequel, de préférence, le cas échéant, la ou les surfaces de retenue (36) et la ou les surfaces de couplage (56) coopèrent à l'état inséré de l'élément de couverture (5) de manière à fixer l'élément de couverture (5) dans le canal de retenue (34).

6. Système de support de luminaire (2) selon l'une quelconque des revendications précédentes, dans lequel la section de couplage (50), destinée à fixer l'élément de couverture (5), peut être fixée dans le canal de retenue (34) par ajustement de forme et/ou connexion par friction et/ou verrouillage de matière.

7. Système de support de luminaire (2) selon l'une quelconque des revendications précédentes, dans lequel la ou chacune des sections de couverture (51) délimite un canal porte-câble (6), qui est de préférence ouvert des deux côtés dans la direction d'extension (X).

8. Système de support de luminaire (2) selon la revendication 7, dans lequel la ou chacune des sections de couverture (51) comprend
• une section de couverture de canal (60) pour couvrir au moins partiellement ou complètement l'ouverture associée (33) d'un côté radialement à la direction d'extension (X), et ainsi couvrir partiellement l'ouverture associée (33), lorsque l'élément de couverture (5) est fixé, et
• une section porte-câble (61) sur un côté de la section de couverture de canal (60) orientée à l'opposé de la direction d'insertion (A),
qui délimitent ensemble le canal porte-câble (6).

9. Système de support de luminaire (2) selon la revendication 8, dans lequel la section porte-câble (61) est reliée à la section de couverture de canal (60) au niveau d'une extrémité distale (62) de la section de couverture (51) ou sa section porte-câble (61) par rapport à la section de couplage (50), et n'est pas reliée à la section de couverture de canal (60) au niveau d'une extrémité proximale (63) de la section de couverture (51) ou sa section porte-câble (61) par rapport à la section de couplage (50), dans lequel la section porte-câbles (61) étant élastiquement pivotante par son extrémité distale (62) par rapport à la section de couverture de canal (60) d'une position fermée à une position ouverte de telle sorte que le canal porte-câbles (6) est sélectivement accessible pour l'insertion latérale de câbles (C) du côté de l'extrémité proximale (63).

10. Système de support de luminaire (2) selon la revendication 9, dans lequel la section porte-câble (61) et/ou la section de couverture de canal (60) comprend/comprennent un contour d'insertion (64) dans la région de l'extrémité proximale (63), qui est configuré de telle sorte que, lorsqu'une force est appliquée sur le contour d'insertion (64) depuis l'extérieur dans une direction (D1) vers le canal porte-câble (6), la section porte-câble (61) est pivotée en position ouverte,
dans lequel, de préférence, le contour d'insertion (64) est en outre configuré de telle sorte que, lorsqu'une force est appliquée sur le contour d'insertion (64) depuis l'intérieur du canal porte-câbles (6) dans une direction (D2) vers l'extérieur, la section porte-câbles (61) reste dans sa position fermée.

11. Système de support de luminaire (2) selon la revendication 9 ou 10, dans lequel la section porte-câbles (61) comprend, de préférence au niveau de son extrémité proximale (63), une partie poignée (67) par laquelle un utilisateur peut faire pivoter la section porte-câbles (61) en position ouverte pour un accès latéral sélectif au canal porte-câbles (6).

12. Système de support de luminaire (2) selon l'une quelconque des revendications précédentes, dans lequel l'élément de couverture (5) présente une section transversale en forme de L ou en forme de T vue dans la direction d'extension (X), et/ou
dans lequel l'élément de couverture (5) est fabriqué ou est en plastique.

13. Système de support de luminaire (2) selon l'une quelconque des revendications précédentes, dans lequel le support (3) présente un côté avant (30) destiné à fournir des sources lumineuses (4) et un côté arrière (31) orienté à l'opposé du côté avant (30),
dans lequel, de préférence, l'un des côtés est le côté arrière (31).

14. Luminaire (1), comprenant :
un système de support de luminaire (2) selon l'une quelconque des revendications précédentes,
une source lumineuse (4) qui est fixée au support (3), et
éventuellement, au moins un ou plusieurs câbles (C) pour alimenter la source lumineuse (4), qui est/sont disposé(s) dans au moins un canal de câbles (32),
dans lequel l'élément de couverture (5) est fixé avec la section de couplage (50) à n'importe quelle position le long de la direction d'extension (X) dans le canal de retenue (34), de sorte qu'au moins une ou chaque section de couverture (51) de l'élément de couverture (5) ainsi fixé couvre au moins partiellement ou complètement la ou l'une des ouvertures (33) d'un côté radialement à la direction d'extension (X), et couvre ainsi partiellement l'ouverture respective (33) afin d'empêcher le(s) câble(s) (C) de tomber lorsqu'ils sont disposés dans le canal de câble correspondant (32).
